Europäisches Patentamt

European Patent Office

Office européen des brevets

(11) Veröffentlichungsnummer: **0 465 920 A2**

# EUROPÄISCHE PATENTANMELDUNG

(21) Anmeldenummer: **91110459.4**

(51) Int. Cl.5: **G01M 3/26**

(22) Anmeldetag: **25.06.91**

(30) Priorität: **07.07.90 DE 4021775**

(43) Veröffentlichungstag der Anmeldung:
**15.01.92 Patentblatt 92/03**

(84) Benannte Vertragsstaaten:
**AT BE CH DE DK ES FR GB GR IT LI NL SE**

(71) Anmelder: **HÜLS TROISDORF
AKTIENGESELLSCHAFT
Postfach 11 65
W-5210 Troisdorf(DE)**

(72) Erfinder: **Schürmann, Ulrich
Margarethenstrasse 10
W-4130 Moers 1(DE)**

(74) Vertreter: **Kaewert, Klaus
Huyssenallee 85
W-4300 Essen 1(DE)**

(54) Verfahren zum Prüfen einer Schweissverbindung.

(57) Nach der Erfindung werden Prüfkanäle an Schweißverbindungen von Kunststoffabdichtungsbahnen durch Beaufschlagung mit Druckflüssigkeit geprüft.

Figur 1

EP 0 465 920 A2

Die Erfindung betrifft ein Verfahren zum Prüfen einer Schweißverbindung von Abdichtungsbahnen, wobei die Schweißverbindung durch zwei im Abstand voneinander verlaufende Schweißnähte gebildet wird, zwischen denen ein Prüfkanal besteht. Die Prüfung von Schweißverbindungen ist im Deponiebereich in der Regel Pflicht. Im Deponiebereich werden Kunststoffabdichtungsbahnen zur Herstellung der Deponiebasisabdichtung verwendet. Die Prüfung erfolgt bislang durch Beaufschlagung mit Druckluft. Sofern der Luftdruck für eine bestimmte Dauer von der Schweißnaht gehalten wird, gilt die Schweißnaht als dicht. Diese Druckluftprüfung ist zwar gegenüber früherem Stand der Technik ein erheblicher Fortschritt. Früher wurden Schweißnähte durch Augenscheinnahme geprüft. Dabei konnten vorhandene Leckagestellen nicht entdeckt werden.

Die Erfindung hat sich die Aufgabe gestellt, die Prüfung zu verbessern. Dabei geht die Erfindung von der Erkenntnis aus, daß die Beaufschlagung mit Druckluft nicht frei von Problemen ist. Z. B. führt eine Verengung im Prüfkanal zu unkontrollierten Druckverhältnissen. Dadurch kann beim Prüfen ein Druckabfall als Zeichen einer Leckage entstehen, obwohl keine Leckage vorhanden ist. Ferner erfolgt der Druckaufbau relativ langsam. Der Prüfvorgang nimmt deshalb einige Zeit in Anspruch.

Nach der Erfindung wird die Prüfung von Schweißverbindungen dadurch verbessert, daß der Prüfkanal mit Druckflüssikeit und einem Prüfdruck von mindestens 8 bar beaufschlagt wird. Der Mindestprüfdruck von 8 bar beinhaltet annähernd eine Verdoppelung des herkömmlichen Prüfdruckes.

Es hat sich gezeigt, daß die Abdichtungsbahnen dür Deponieabdichtungen mit Dicken von 2 bis 3 mm und mehr aus PEHD einem solchen Prüfdruck ohne weiteres gewachsen sind. Das gilt vor allem bei Einhaltung von Prüfkanalbreiten bis 15 mm, vorzugsweise bis 10 mm.

Für die erfindungsgemäße hydraulische Prüfung wird wahlweise ein Ende der Schweißnaht verschlossen und am anderen Ende der Schweißnaht die Hydraulikleitung angebracht. Es können jedoch auch beide Enden verschlossen werden und die Hydraulikleitung zwischen den Enden angeordnet werden. Das Verschließen der Prüfkanalenden erfolgt durch Verschweißen und/oder auf mechanischem Wege, z. B. mit Hilfe einer Gripzange.

Für die Hydraulikzuleitung wird wahlweise in den obenliegenden Bahnenrand ein Loch eingestanzt oder in anderer Weise eingebracht. Der untenliegende Bahnenrand bleibt vorzugsweise unbeschädigt. Dies kann auch nach Herstellung der Schweißnähte dadurch erreicht werden, daß der untenliegende Bahnenrand mit Hilfe eines in den Prüfkanal geschobenen Bleches geschützt wird. Das Blech ergänzt den Lochstempel dann als Stanzwerkzeug. Das gilt vor allem, wenn das eingeschobene Blech zum Lochstempel hin eine Vertiefung aufweist. Die Vertiefung kann ihrerseits als Loch ausgebildet sein, wenn das Blech den Lochungsdruck bzw. Stanzdruck aufnimmt. Das kann in der Weise erfolgen, daß das Blech in einen Rahmen des Stanzwerkzeuges gehalten wird. Als Stanzwerkzeug eignet sich auch eine Schraubzwinge. Das oben beschriebene Blech kann dabei als Zunge der Schraubzwinge in den Prüfkanal greifen. Der bewegte Stempel des Stanzwerkzeuges wird vorzugsweise durch die Spindel der Schraubzwinge und einen an der Spindelvorderseite befestigten, geeigneten Kopf gebildet.

Für die Anbringung des Hydraulikanschlusses eignen sich verschiedene Verfahrensweisen. Bei einer Verfahrensweise wird ein Rohrstück in den Prüfkanal eingeführt.

Vorzugweise findet ein Anschluß der Hydraulikzuleitung durch Anpressung statt. Nach der Erfindung ist ein besonderes Anschlußstück vorgesehen, welches stumpf gegen den obenliegenden gelochten Bahnenrand gedrückt wird. Dies kann unter Zuhilfenahme einer Dichtscheibe erfolgen. Die Dichtscheibe ist zwischen Anschlußstück und Bahnenrand vorgesehen.

Als Anpreßeinrichtungen für das Anschlußstück eignet sich wieder eine Schraubzwinge. Es ist günstig, die Spindel der Schraubzwinge mit dem Anschlußstück zu verbinden. Die Verbindung soll drehbeweglich sein. Die Drehbewegung der Anstellspindel soll keine Drehbewegung des Anschlußstückes verursachen. Der zu der Schraubzwinge gehörende Bogen bzw. Bügel umgreift den durch die beiden Abdichtungsbahnen gebildeten Rand der Abdichtung und untergreift die Verbindungsstelle.

Günstig ist, wenn das Anschlußstück zugleich als Manometer ausgebildet ist bzw. mit dem Manometer versehen ist. Damit hat das Manometer einen zentralen, vorteilhaft zu beobachtenden Sitz. Darüber hinaus bietet das Anschlußstück ausreichenden Raum bzw. ausreichendes Material für eine Anschlußbohrung des Manometers.

Überraschenderweise führt die Anpressung des Anschlußstückes und die damit verbundene Zusammenpressung des Prüfkanales nicht zu einem Verschluß des Prüfkanales. In der Praxis zeigt sich, daß leicht ein Durchfluß der Hydraulik- bzw. Prüfflüssigkeit entsteht. Das gilt vor allem, wenn zunächst mit relativ geringem Anstelldruck gearbeitet wird. Nach Aufwölben des Prüfkanales kann entweder in einem Schritt oder in mehreren Schritten der Anstelldruck erhöht werden.

Darüber hinaus kann einem Verkleben der Öffnung in verschiedener Weise entgegengewirkt werden. Eine Möglichkeit wird durch einen Draht mit geringem Durchmesser gebildet. Der geringe Durchmesser verhindert eine Beschädigung der Abdichtungsbahnenränder. An dem Draht vorbei gelangt immer Druckflüssigkeit in den Prüfkanal.

Nach der Prüfung einer Verbindung zwischen zwei Abdichtungsbahnen können weitere Abdichtungsbahnen angeschweißt werden.

Deponieabdichtungen sind so groß, daß einzelne Abdichtungsbahnen an allen Rändern mit anderen Abdichtungsbahnen verbunden werden. Kreuzstöße werden vermieden, indem anzuschließende Abdichtungsbahnen geringfügig versetzt werden. Dadurch entsteht ein Z-förmiger Verlauf der Verbindungsnähte. Dies ist wichtig für die üblicherweise verwendeten Schweißgeräte. Diese Geräte können quer zur herzustellenden Schweißnaht verlaufende "Alt"-Schweißnähte überwinden, wenn die Alt-Schweißnähte abgeschrägt sind und keine Kreuzstöße zu überwinden sind. Für das Abschrägen ist ausreichend, daß die quer zur Bewegungsrichtung des Schweißgerätes in Schweißgerätebahn liegenden Bahnenränder abgeschliffen oder abgefräst worden sind. Dabei wird ein Schrägungswinkel von vorzugsweise 5 bis 10˚, maximal 20˚ eingehalten.

In der Zeichnung ist ein Ausführungsbeispiel der Erfindung dargestellt.

Mit 1 und 2 sind zwei Abdichtungsbahnen bezeichnet, die an den einander überlappenden Rändern durch Schweißnähte 5 miteinander verbunden sind. Die Schweißnähte 5 haben einen Abstand von 10 mm und verlaufen parallel zueinander, so daß zwischen den Schweißnähten ein Prüfkanal 6 entstanden ist.

Das eine Ende des Prüfkanales 6 ist durch eine nichtdargestellte Schweißnaht geschlossen. Das Ende ist zugleich mit einer Gripzange gegen ein Öffnen gesichert.

An dem gegenüberliegenden freien Ende ist eine Schraubzwinge angebracht. Die Schraubzwinge besteht aus einem Bügel 7 und einer Spindel 8 sowie einem Anschlußstück 4. Das Anschlußstück 4 sitzt drehbeweglich auf der Spindel 8. Mit der Schraubzwinge wird das Anschlußstück 4 gegen das Prüfkanalende gepreßt. Dabei sichert eine Dichtung 3 einen dichten Anschluß zwischen dem Anschlußstück 4 und der Abdichtungsbahn 1.

Die Anpressung wird dadurch bewirkt, daß das Ende des Bügels, welches den Rand der durch die beiden Abdichtungsbahnen 1 und 2 gebildeten Abdichtungslage umfaßt, unter den Prüfkanal bzw. unter die untenliegende Abdichtungsbahn 2 greift.

In der obenliegenden Abdichtungsbahn 1 befindet sich ein Loch 12. Das Loch 12 ist ausgestanzt. Das Anschlußstück 4 wird von der Spindel 8 der Zwinge 7 genau auf das Loch 12 gepreßt. Im Anschlußstück 4 befindet sich im Bereich des Loches 12 eine Zuleitung für Druckflüssigkeit.

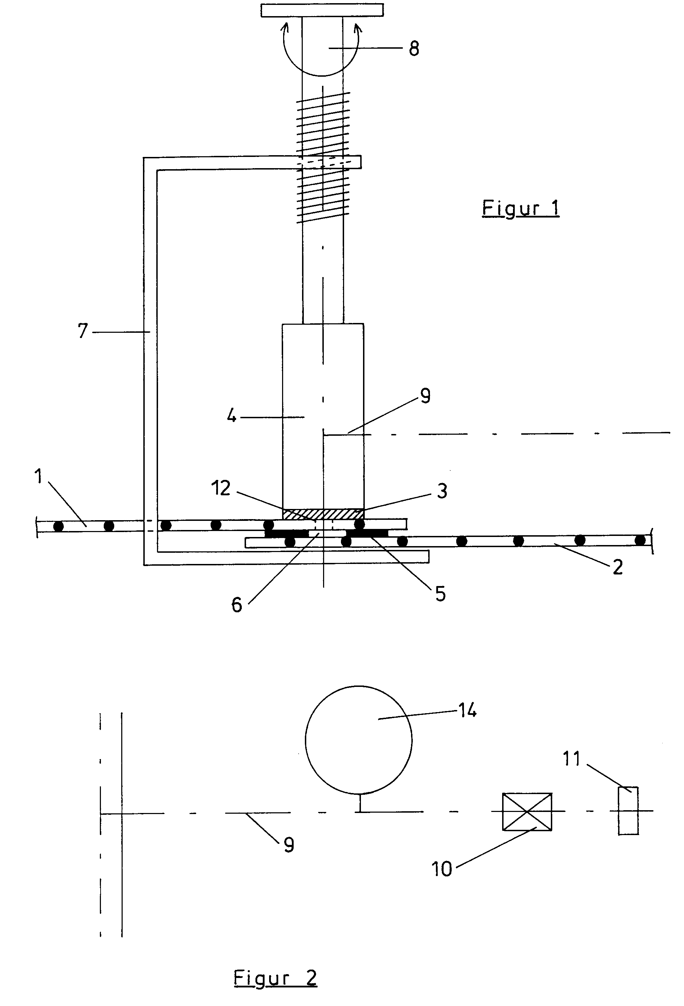

Zum Anschlußstück 4 hin führt eine Druckleitung 9, die in Figur 1 strichpunktiert dargestellt ist.

In Figur 2 ist ein Schema der zugehörigen Hydraulikanlage dargestellt. An die Druckleitung 9 ist ein Manometer 14 angeschlossen. Ferner befindet sich in der Druckleitung 9 ein Rückschlagventil bzw. Absperrventil 10. In die Druckleitung 9 speist eine Hydraulikpumpe 11 aus einem nichtdargestellten Hydraulikbehälter Druckflüssigkeit.

Zur Prüfung der Schweißnaht wird solange Druckflüssigkeit in den Prüfkanal 6 gepumpt, bis sich ein Druck von 10 bar aufgebaut hat. Nach Abschalten der Druckpumpe und Schließen des Absperrventils zeigt ein über ein angemessenes Zeitintervall konstanter Druck, daß die Schweißverbindung dicht ist.

**Patentansprüche**

1. Verfahren zum Prüfen von Schweißverbindungen an Kunststoffabdichtungsbahnen, wobei die Verbindung durch zwei im Abstand voneinander verlaufende Schweißnähte gebildet wird, zwischen denen ein Prüfkanal besteht, dadurch gekennzeichnet, daß der Prüfkanal (6) mit Druckflüssigkeit und einem Prüfdruck von mindestens 8 bar beaufschlagt wird.

2. Verfahren nach Anspruch 1, dadurch gekennzeichnet, daß mindestens ein Ende des Prüfkanals (6) verschweißt wird.

3. Verfahren nach Anspruch 2, gekennzeichnet durch eine zusätzliche Gripzangensicherung des Prüfkanalendes.

4. Verfahren nach einem oder mehreren der Ansprüche 1 bis 3, gekennzeichnet durch eine Lochung in einer Prüfkanalwand und ein gegen das Loch gepreßtes Anschlußstück der Hydraulikprüfung.

5. Verfahren nach Anspruch 4, dadurch gekennzeichnet, daß das Anschlußstück mit einer Schraubzwinge angepreßt wird.

6. Verfahren nach Anspruch 5, gekennzeichnet durch einen geringen Anpreßdruck des Anschlußstückes bei Beginn der Beaufschlagung mit Hydraulikflüssigkeit und einer Erhöhung des Anpreßdruckes im Laufe der Beaufschlagung mit Hydraulikflüssigkeit in einem oder mehreren Schritten.

7. Verfahren nach einem oder mehreren der Ansprüche 1 bis 6, gekennzeichnet durch ein in den Prüfkanal im Bereich des Loches eingelegtes Drahtstück.

8. Verfahren nach einem oder mehreren der Ansprüche 1 bis 7, gekennzeichnet durch Z-förmige Stöße zwischen mehreren Abdichtungsbahnen.

9. Verfahren nach Anspruch 8, gekennzeichnet durch eine Abschrägung der vom Schweißgerät zu überwindenden Bahnenränder, die quer zur Schweißrichtung verlaufen.

Figur 1

Figur 2